# EUROPEAN PATENT APPLICATION

(11) **EP 4 800 370 A1**
(43) Date of publication of application: **02.09.2026**
(21) Application number: 24895843.1
(22) Date of filing: 02.09.2024
(51) Int. Cl.: G01N 9/24

(54) **SURFACE DENSITY MEASUREMENT DEVICE AND COATING SYSTEM**

(30) Priority: 28.11.2023 CN 202311617041
(71) Applicant: Contemporary Amperex Technology Co., Limited, Ningde, Fujian 352100 (CN); Contemporary Amperex Runzhi Software Technology Limited, Ningde, Fujian 352100 (CN)
(72) Inventor: ZHAN, Bingyang, Ningde, Fujian 352100 (CN); ZHANG, Jingdong, Ningde, Fujian 352100 (CN); YAN, Liangjie, Ningde, Fujian 352100 (CN); CHEN, Weigang, Ningde, Fujian 352100 (CN); ZHEN, Zhihui, Ningde, Fujian 352100 (CN); WANG, Qiangjun, Ningde, Fujian 352100 (CN); ZHANG, Lai, Ningde, Fujian 352100 (CN)
(74) Representative: Lorenz Seidler Gossel Part. mbB
(86) International application number: PCT/CN2024/116259
(87) International publication number: WO 2025/112744

(57) **Abstract**

A surface density measurement device and a coating system. The surface density measurement device (100) comprises an emitter component (10), a first detector (20) and a second detector (30), the emitter component (10) being used for emitting rays to an object to be measured (700). A first measurement channel (21) for said object (700) to pass through is formed between the first detector (20) and the emitter component (10), and the first detector (20) can receive rays passing through said object (700) located in the first measurement channel (21), so as to measure the surface density of said object (700). A second measurement channel (31) through which an object to be measured (700) can pass is formed between the second detector (30) and the emitter component (10), and the second detector (30) can receive rays passing through said object (700) located in the second measurement channel (31), so as to measure the surface density of said object (700). The emitter component (10) is configured to synchronously emit rays to the object to be measured (700) which enters the first measurement channel (21) and the object to be measured (700) which enters the second measurement channel (31).

## Description

### CROSS-REFERENCE TO RELATED APPLICATIONS

The present application claims priority to Chinese Patent Application No. 202311617041.0 filed on 28 November 2023 and entitled "SURFACE DENSITY MEASUREMENT APPARATUS AND COATING SYSTEM," the entire content of which is incorporated herein by reference.

### TECHNICAL FIELD

The present application relates to the technical field of a battery, and particularly relates to a surface density measurement apparatus and a coating system.

### BACKGROUND

With the development of new energy technologies, batteries are increasingly widely used, such as use in a mobile phone, a laptop, a battery cart, an electric vehicle, an electric airplane, an electric boat, an electric toy car, an electric toy boat, an electric toy plane, and an electric tool.

An electrode plate is a most important component of a battery, and its quality directly affects the reliability of the entire battery. Therefore, it is particularly important to detect and control manufacturing quality of the electrode plate, particularly gram weight (surface density) of its material per unit area. Therefore, how to improve the surface density detection accuracy during a coating process of the electrode plate is a problem to be urgently solved.

### SUMMARY OF THE INVENTION

In view of the above problem, the present application provides a surface density measurement apparatus and a coating system, thereby effectively improving the accuracy of surface density measurement.

In a first aspect, an embodiment of the present application provides a surface density measurement apparatus, comprising an emitter component configured to emit a ray toward a to-be-measured object, a first detector, and a second detector. The first detector forms with the emitter component a first detection channel for the to-be-measured object to travel through and is capable of receiving the ray running through the to-be-measured object located in the first detection channel, to measure a surface density of the to-be-measured object. The second detector forms with the emitter component a second detection channel for the to-be-measured object to travel through and is capable of receiving the ray running through the to-be-measured object located in the second detection channel, to measure a surface density of the to-be-measured object. The emitter component is configured to synchronously emit the ray toward the to-be-measured object entering the first detection channel and the to-be-measured object entering the second detection channel.

On the one hand, the surface density measurement apparatus of the present application uses a single emitter component to synchronously emit the ray toward the to-be-measured object entering the first detection channel and the to-be-measured object entering the second detection channel, and can reduce, compared to use of two separate emitter components to emit rays toward the to-be-measured object located in the first detection channel and the to-be-measured object located in the second detection channel respectively, the impact of synchronism error between the two separate emitter components on the accuracy of surface density measurement. On the other hand, in the surface density measurement apparatus of the present application, a length of a path of the to-be-measured object when moving from the first detection channel to the second detection channel is a constant value, and a corresponding position relationship between a first surface density and a second surface density can be determined without the need for distance measurement using a meter counter, thus reducing the impact of distance measurement error of the meter counter on the accuracy of surface density measurement. Therefore, the surface density measurement apparatus of the present application can effectively improve the accuracy of surface density measurement.

In some embodiments of the first aspect, the emitter component is configured to be movable back and forth along a first direction, with the first direction perpendicular to a conveying direction of the to-be-measured object.

Based on the above technical solutions, the emitter component is arranged to move back and forth along the first direction, so that the ray emitted from the emitter component can run through different positions of the to-be-measured object along the first direction, to enhance the ray scanning range of the emitter component, thereby further improving the measurement accuracy of the surface density measurement apparatus.

In some embodiments of the first aspect, the first detector and the second detector are disposed on both sides of the emitter component along a second direction respectively, with the first direction, the second direction, and the conveying direction perpendicular pairwise.

This is conductive to improving the synchronism between the ray emitted from the emitter component toward the to-be-measured object located in the first detection channel and the ray emitted from the emitter component toward the to-be-measured object located in the second detection channel, thereby further improving the measurement accuracy of the surface density measurement apparatus.

In some embodiments of the first aspect, a movement velocity V1 of the emitter component and a conveying velocity V2 of the to-be-measured object satisfy a relationship: V1=a*(S/L)*V2, wherein a is a constant coefficient, S is a length of a one-way path of the emitter component when moving back and forth along the first direction, and L is a length of a path of the to-be-measured object from the first detector to the second detector.

Based on the above technical solutions, the movement velocity V1 of the emitter component and the conveying velocity V2 of the to-be-measured object satisfy the above mapping relationship, so that the movement velocity V1 of the emitter component can be flexibly adjusted based on the conveying velocity V2 of the to-be-measured object, thereby effectively improving the flexibility and adaptability of the surface density measurement apparatus.

In some embodiments of the first aspect, a conveying direction of the to-be-measured object in the first detection channel is opposite to a conveying direction of the to-be-measured object in the second detection channel, so that the to-be-measured object can be conveyed in the surface density measurement apparatus in a Z-shaped conveyor belt layout, thereby improving the structural compactness of the surface density measurement apparatus.

In some embodiments of the first aspect, the surface density measurement apparatus further comprises a plurality of support rollers configured to support the to-be-measured object and guide the to-be-measured object to move. A part of the support rollers among the plurality of support rollers are arranged on two sides of the first detection channel that are opposite to each other along a third direction, and other part of the support rollers among the plurality of support rollers are arranged on two sides of the second detection channel that are opposite to each other along the third direction, with the third direction parallel to the conveying direction of the to-be-measured object.

Based on the above technical solutions, the support rollers are provided to support the to-be-measured object, to reduce jitter of the to-be-measured object during a conveying process, thereby reducing the impact of the jitter of the to-be-measured object on the surface density measurement, which is conducive to improving the measurement accuracy of the surface density measurement apparatus.

In some embodiments of the first aspect, the surface density measurement apparatus further comprises a communication component communicatively connected to the first detector and the second detector, wherein the communication module is configured to obtain surface density information of the first detector and the second detector, and send the surface density information to a target apparatus configured to coat the to-be-measured object.

Based on the above technical solutions, the communication component is arranged, so that the surface density measurement apparatus measures the to-be-measured object to obtain surface density information and automatically conveys the surface density information to the target apparatus configured to coat the to-be-measured object, thereby effectively improving the degree of automation, reducing manual intervention, and facilitating reducing the costs.

In some embodiments of the first aspect, the emitter component comprises at least one of an X-ray generator, a β-ray generator, and a laser generator.

In a second aspect, the present application provides a coating system, comprising an unwinding apparatus, a coating apparatus, a winding apparatus, and the surface density measurement apparatus in any one of the above solutions, wherein the unwinding apparatus is configured to provide a strip material, the coating apparatus is configured to coat a coating layer on a surface of the strip material, and the winding apparatus is configured to wind the strip material coated with the coating layer. The strip material travels through the first detection channel and the second detection channel, with the first detection channel located upstream of the coating apparatus and the second detection channel located downstream of the coating apparatus along a conveyor belt direction of the strip material.

On the one hand, a single emitter component is used to synchronously emit the ray toward the strip material entering the first detection channel and the strip material entering the second detection channel, and can reduce, compared to use of two separate emitter components to emit rays toward the strip material located in the first detection channel and the strip material located in the second detection channel respectively, the impact of synchronism error between the two separate emitter components on the accuracy of surface density measurement. On the other hand, in the surface density measurement apparatus of the present application, a length of a path of the strip material when moving from the first detection channel to the second detection channel is a constant value, and a corresponding position relationship between a surface density of the strip material before coating and a surface density of the coated strip material can be determined without the need for distance measurement using a meter counter, thus reducing the impact of distance measurement error of the meter counter on the accuracy of surface density measurement, thereby effectively improving the accuracy of surface density measurement, and improving the overall coating quality of the coating system.

In some embodiments of the second aspect, the coating system further comprises a drying apparatus located downstream of the coating apparatus along the conveyor belt direction. The drying apparatus can dry the coating layer to improve the stability of the coating layer, so that the coating layer is less likely to fall off from a substrate.

In some embodiments of the second aspect, the drying apparatus is further located upstream of the second detection channel along the conveyor belt direction.

Based on the above technical solutions, the drying apparatus is arranged upstream of the second detection channel, so that the strip material is coated by the coating apparatus and dried by the drying apparatus before surface density measurement through the second detection channel of the surface density measurement apparatus, thereby resulting in high stability of the dry film coating layer, further reducing surface density measurement errors, achieving effective real-time adjustment of relevant parameters of the coating apparatus based on a net surface density of the dry film coating layer, and facilitating further improving the overall coating quality of the coating system.

In some embodiments of the second aspect, two coating apparatuses are provided along a conveyor belt direction, with one of the two coating apparatuses configured to coat the coating layer on one surface of the strip material and the other one of the two coating apparatuses configured to coat the coating layer on other surface of the strip material. Two surface density measurement apparatuses are provided corresponding to the two coating apparatuses respectively.

Based on the above technical solutions, two coating apparatuses and two surface density measurement apparatuses are arranged, so that the coating system achieves double-sided coating of the strip material on one production line, thereby improving the coating efficiency of the coating system.

In some embodiments of the second aspect, the coating system further comprises two drying apparatuses arranged corresponding to the two coating apparatuses, with the drying apparatuses located downstream of the coating apparatuses along the conveyor belt direction.

Based on the above technical solutions, the two drying apparatuses are arranged, so that on the one hand, the coating system further dries the coating layer of the strip material on one production line, thereby further improving the coating efficiency of the coating system. On the other hand, the first coating layer is dried to obtain the first dry film coating layer with high stability, followed by coating of the second coating layer and measurement using the second surface density measurement apparatus, thereby further reducing subsequent measurement error of the second surface density measurement apparatus and coating difficulty of the second coating apparatus, and facilitating further improving the overall coating quality of the electrode plate.

In some embodiments of the second aspect, the coating system further comprises a detection apparatus configured to measure a surface density of the strip material coated with the coating layer dried by the drying apparatuses on both surfaces.

Based on the above technical solutions, the detection apparatus is arranged to measure an overall surface density of the coated electrode plate for use as data for monitoring the coating quality of the electrode plate, which is conductive to improving the reliability of the coating system.

In some embodiments of the second aspect, the detection apparatus is configured as a surface density measurement apparatus, which can improve the consistency of the entire coating system.

The above description merely provides an overview of the technical solutions of the present application. In order to more clearly understand the technical means of the present application, the present application may be implemented based on the contents of the specification, and in order to make the above and other objects, features, and advantages of the present application more obvious and understandable, detailed description of the present application is recited below.

### DESCRIPTION OF DRAWINGS

By reading the detailed description of the preferred embodiments below, various other advantages and benefits will become apparent to those of ordinary skill in the art. The drawings are used for the purpose of illustrating the preferred embodiments only and are not to be considered a limitation to the present application. Moreover, throughout the drawings, like reference numerals represent like components. In the figures:
FIG. 1 is a schematic structural diagram of a surface density measurement apparatus provided in some embodiments of the present application;
FIG. 2 is a schematic structural diagram of a ray trajectory formed on a to-be-measured object by an emitter component of a surface density measurement apparatus provided in some embodiments of the present application;
FIG. 3 is a schematic structural diagram of a coating system provided in some embodiments of the present application; and
FIG. 4 is a schematic structural diagram of another coating system provided in some embodiments of the present application.

Reference numerals in the Detailed Description are as follows:
100. Surface density measurement apparatus; 100a. First surface density measurement apparatus; 100b. Second surface density measurement apparatus; 200. Unwinding apparatus; 300. Coating apparatus; 300a. First coating apparatus; 300b. Second coating apparatus; 400. Winding apparatus; 500. Drying apparatus; 500a. First drying apparatus; 500b. Second drying apparatus; 600. Detection apparatus; 700. To-be-measured object; 800. Strip material;
10. Emitter component; 20. First detector; 21. First detection channel; 30. Second detector; 31. Second detection channel; 40. Support roller; 50. Communication component; X. First direction; Y. Second direction; Z. Third direction; H. One-way path.

### DETAILED DESCRIPTION

For the objects, technical solutions and advantages of the embodiments of the present application to be clearer, the technical solutions in the embodiments of the present application will be clearly and completely described below in conjunction with the drawings in the embodiments of the present application, and it is apparent that the described embodiments are some, rather than all, of the embodiments of the present application. All other embodiments obtained by those of ordinary skill in the art based on the embodiments of the present application without involving any creative effort shall fall within the scope of protection of the present application.

Unless otherwise defined, all technical and scientific terms used in the present application shall have the same meanings as those generally understood by those skilled in the technical field to which the present application belongs. The terms used in the specification of the present application are merely for the purpose of describing specific embodiments and are not intended to limit the present application. The terms "include" and "have" and any variations thereof in the specification and claims of the present application and the above Description of Drawings are intended to cover non-exclusive inclusion. The terms "first," "second," etc. in the specification and the claims of the present application as well as the above drawings are used to distinguish different objects, rather than to describe a specific order or primary-secondary relationship.

Reference to an "embodiment" in the present application means that a particular feature, structure, or property described with reference to the embodiment may be included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

"A plurality of" appearing in the present application means two or more (including two).

The term "parallel" in the present application includes not only an absolutely parallel situation, but also a conventionally recognized approximately parallel situation in engineering; and the term "perpendicular" includes not only an absolutely perpendicular situation, but also a conventionally recognized approximately perpendicular situation in engineering.

The battery cell may be, e.g., a lithium-ion battery cell, a sodium-ion battery cell, a sodium/lithium-ion battery cell, a lithium metal battery cell, a sodium metal battery cell, a lithium-sulfur battery cell, a magnesium-ion battery cell, a nickel-metal hydride battery cell, a nickelcadmium battery cell, or a lead storage battery cell, which is not limited to in the embodiments of the present application.

The battery cell generally comprises an electrode assembly. The electrode assembly comprises a positive electrode plate, a negative electrode plate, and a spacer. During charging and discharging of the battery cell, active ions (e.g., lithium ions) are intercalated and deintercalated between the positive electrode plate and the negative electrode plate. The spacer is arranged between the positive electrode plate and the negative electrode plate, and can function to prevent a short circuit between the positive electrode and the negative electrode, while allowing active ions to pass through.

As an example, the battery cell may be a prismatic battery cell, a pouch cell, or a battery cell of other shapes, the prismatic battery cell includes a battery cell of a square shell, a blade-shaped battery cell, and a polygonal prismatic battery cell, and the polygonal prismatic battery cell is, for example, a hexagonal prismatic battery cell, etc., which is not particularly limited in the present application.

The battery mentioned in the embodiments of the present application refers to a single physical module comprising one or more battery cells to provide higher voltage and capacity.

In some embodiments, the battery may be a battery pack. The battery pack comprises a battery box body and a battery cell. The battery cell or the battery module is accommodated in the battery box body.

In some embodiments, the battery may be an energy storage apparatus. The energy storage apparatus includes an energy storage container, an energy storage electric cabinet, or the like.

With the development of new energy technologies, batteries are increasingly widely used, such as use in a mobile phone, a laptop, a battery cart, an electric vehicle, an electric airplane, an electric boat, an electric toy car, an electric toy boat, an electric toy plane, and an electric tool.

An electrode plate is a most important component of a battery, and its quality directly affects the reliability of the entire battery. Therefore, it is particularly important to detect and control manufacturing quality of the electrode plate, particularly gram weight (surface density) of its material per unit area. A surface density measurement apparatus is usually used to measure a surface density of the electrode plate. The surface density measurement apparatus comprises an emitter component and a detector. When the surface density of the electrode plate is measured, the emitter component emits a ray toward the electrode plate, the ray penetrates the electrode plate and is then received by the detector, and the surface density of the electrode plate can be calculated by measuring the intensities of the ray before and after penetrating the electrode plate.

At present, the coating system generally comprises an unwinding apparatus, a coating apparatus, a surface density measurement apparatus, a meter counter, and a winding apparatus. A plurality of surface density measurement apparatuses are usually used throughout the coating production line to measure surface densities of the electrode plate at different workstages. Introduction is provided with a current conventional solution of three surface density measurement apparatuses as an example. Along a process flow direction of the coating production line, the first surface density measurement apparatus is used to measure a surface density of the substrate; the second surface density measurement apparatus is used to measure a total surface density of a first surface coating layer and the substrate; and a third surface density measurement apparatus is used to measure a total surface density of the first surface coating layer, a second surface coating layer, and the substrate. A net surface density of the first surface coating layer and a net surface density of the second surface coating layer are used to extrapolate measurement data of each surface density measurement apparatus at a same position of the strip material using distance data measured by the meter counter, and then a difference is calculated.

For example, the net surface density of the first surface coating layer is a difference between measurement data from the first surface density measurement apparatus and measurement data from the second surface density measurement apparatus, wherein a corresponding position relationship between the measurement data from the first surface density measurement apparatus and the measurement data from the second surface density measurement apparatus is determined using the distance data from the meter counter; and the net surface density of the second surface coating layer is a difference between the measurement data from the second surface density measurement apparatus and measurement data from the third surface density measurement apparatus, wherein a corresponding position relationship between the measurement data from the second surface density measurement apparatus and the measurement data from the third surface density measurement apparatus is determined using the distance data from the meter counter.

Based on surface density data of the coating layer at different positions of the strip material, parameters, such as an inlet slurry flow rate, an outlet clearance, and an adjustment block, of the coating apparatus can be adjusted pertinently to improve the coating uniformity, thus improving the coating quality of the electrode plate.

However, based on the above solutions, a synchronism error between the plurality of surface density measurement apparatuses and an error in a distance data measurement process using the meter counter result in poor surface density measurement accuracy throughout the coating process, failure to accurately control the coating parameters of the coating apparatus, and poor coating quality of the entire electrode plate.

Based on the above considerations, the present application designs a surface density measurement apparatus, comprising an emitter component configured to emit a ray toward a to-be-measured object, a first detector, and a second detector. The first detector forms with the emitter component a first detection channel for the to-be-measured object to travel through and is capable of receiving the ray running through the to-be-measured object located in the first detection channel, to measure a surface density of the to-be-measured object. The second detector forms with the emitter component a second detection channel for the to-be-measured object to travel through and is capable of receiving the ray running through the to-be-measured object located in the second detection channel, to measure a surface density of the to-be-measured object. The emitter component is configured to synchronously emit the ray toward the to-be-measured object entering the first detection channel and the to-be-measured object entering the second detection channel.

The surface density measurement apparatus measures the to-be-measured object located in the first detection channel to obtain a first surface density of the to-be-measured object, and measures the to-be-measured object located in the second detection channel to obtain a second surface density of the to-be-measured object. On the one hand, the surface density measurement apparatus of the present application uses a single emitter component to synchronously emit the ray toward the to-be-measured object entering the first detection channel and the to-be-measured object entering the second detection channel, and can reduce, compared to use of two separate emitter components to emit rays toward the to-be-measured object located in the first detection channel and the to-be-measured object located in the second detection channel respectively, the impact of synchronism error between the two separate emitter components on the accuracy of surface density measurement. On the other hand, in the surface density measurement apparatus of the present application, a length of a path of the to-be-measured object when moving from the first detection channel to the second detection channel is a constant value, and a corresponding position relationship between a first surface density and a second surface density can be determined without the need for distance measurement using a meter counter, thus reducing the impact of distance measurement error of the meter counter on the accuracy of surface density measurement. Therefore, the surface density measurement apparatus of the present application can effectively improve the accuracy of surface density measurement.

The technical solutions described in the embodiments of the present application are adapted to a battery cell, a battery, and an electrical apparatus using the battery.

The electrical apparatus may be, e.g., a vehicle, a mobile phone, a portable device, a laptop, a ship, a spacecraft, an electric toy, and an electric tool. The vehicle may be a fuel vehicle, a gas vehicle, or a new energy vehicle. The new energy vehicle may be an all-electric vehicle, a hybrid electric vehicle, an extended-range electric vehicle, or the like. The spacecraft includes an airplane, a rocket, a space shuttle, a spaceship, and the like. The electric toy includes a fixed or mobile electric toy, such as a game console, an electric car toy, an electric ship toy, and an electric aircraft toy. The electric tool includes a metal cutting electric tool, a grinding electric tool, an assembly electric tool, and a railway electric tool, such as an electric drill, an electric grinder, an electric wrench, an electric a screwdriver, an electric hammer, an impact drill, a concrete vibrator, and an electric planer. These embodiments of the present application do not make special restrictions on the above electrical apparatuses.

It should be understood that the technical solutions described in the embodiments of the present application are not only limited to the batteries and electrical devices described above, but also may be adapted to all batteries comprising battery box bodies and electrical devices using batteries. However, for the sake of brevity, the following embodiments are all introduced using an electric vehicle as an example.

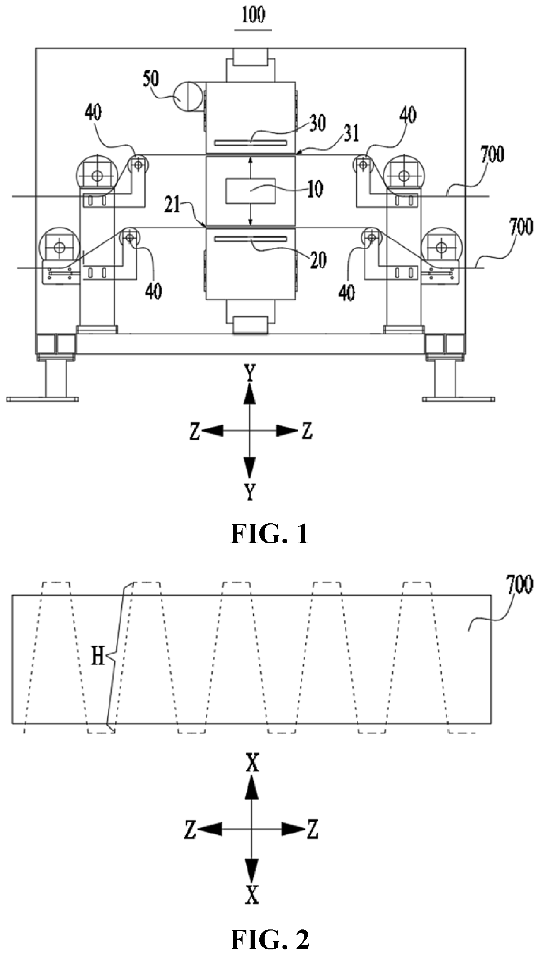

FIG. 1 is a schematic structural diagram of a surface density measurement apparatus provided in some embodiments of the present application, and FIG. 2 is a schematic structural diagram of a ray trajectory formed on a to-be-measured object by an emitter component of a surface density measurement apparatus provided in some embodiments of the present application.

Referring to FIGS. 1 to 2, an embodiment of the present application provides a surface density measurement apparatus 100, wherein the surface density measurement apparatus 100 comprises an emitter component 10, a first detector 20, and a second detector 30, wherein the emitter component 10 is configured to emit a ray toward a to-be-measured object 700. The first detector 20 forms with the emitter component 10 a first detection channel 21 for the to-be-measured object 700 to travel through, and the first detector 20 is capable of receiving the ray running through the to-be-measured object 700 located in the first detection channel 21, to measure a surface density of the to-be-measured object 700. The second detector 30 forms with the emitter component 10 a second detection channel 31 for the to-be-measured object 700 to travel through, and the second detector 30 is capable of receiving the ray running through the to-be-measured object 700 located in the second detection channel 31, to measure a surface density of the to-be-measured object 700. The emitter component 10 is configured to synchronously emit the ray toward the to-be-measured object 700 entering the first detection channel 21 and the to-be-measured object 700 entering the second detection channel 31.

The emitter component 10 can emit the ray toward the to-be-measured object 700. After penetrating the to-be-measured object 700, the ray is received by the first detector 20 and the second detector 30. The first detector 20 and the second detector 30 each measure the intensity of the ray before and after penetrating the to-be-measured object 700 to calculate the surface density of the to-be-measured object 700.

The emitter component 10 may be a ray generator. As an example, the emitter component 10 may be, e.g., an X-ray generator or a β-ray generator. For different to-be-measured objects 700, the emitter component 10 can emit rays of different types. As an example, when the to-be-measured object 700 is a positive electrode plate, the emitter component 10 may be an X-ray generator and emit an X-ray; and when the to-be-measured object 700 is a negative electrode plate, the emitter component 10 may be a β-ray generator and emit a β-ray. Or, the emitter component 10 may be a laser generator, and may be selected based on an actual application environment.

The first detector 20 and the second detector 30 may each be an ionization chamber capable of using an ionizing radiation effect of ionizing radiation to measure an intensity of the ionizing radiation, i.e., an intensity of the ray. The first detector 20 and the second detector 30 each have an internal operating circuit that can calculate the surface density of the to-be-measured object 700 based on the intensity of the ray emitted from the emitter component 10 and the intensity of the ray received by it.

The to-be-measured object 700 may be a positive electrode plate or a negative electrode plate of a lithium battery, or may be an additional thin-sheet product such as a spacer or paper.

The emitter component 10 and the first detector 20 are arranged face to face to form a first detection channel 21 or a first detection clearance; and the emitter component 10 and the second detector 30 are arranged face to face to form a second detection channel 31 or a second detection clearance.

As an example, driven by the conveying component such as a bypass roller or a conveyor belt, the to-be-measured object 700 can sequentially travel through the first detection channel 21 and the second detection channel 31 during continuous movement, so that the surface density measurement apparatus 100 measures the to-be-measured object 700 located in the first detection channel 21 to obtain a first surface density of the to-be-measured object 700, and the surface density measurement apparatus 100 measures the to-be-measured object 700 located in the second detection channel 31 to obtain a second surface density of the to-be-measured object 700.

On the one hand, the surface density measurement apparatus 100 of the present application uses a single emitter component 10 to synchronously emit the ray toward the to-be-measured object 700 entering the first detection channel 21 and the to-be-measured object 700 entering the second detection channel 31, and can reduce, compared to use of two separate emitter components 10 to emit rays toward the to-be-measured object 700 located in the first detection channel 21 and the to-be-measured object 700 located in the second detection channel 31 respectively, the impact of synchronism error between the two separate emitter components 10 on the accuracy of surface density measurement. On the other hand, in the surface density measurement apparatus 100 of the present application, a length of a path of the to-be-measured object 700 when moving from the first detection channel 21 to the second detection channel 31 is a constant value, and a corresponding position relationship between the first surface density and the second surface density can be determined without the need for distance measurement using a meter counter, thus reducing the impact of distance measurement error of the meter counter on the accuracy of surface density measurement. Therefore, the surface density measurement apparatus 100 of the present application can effectively improve the accuracy of surface density measurement.

In some embodiments, the emitter component 10 is configured to be movable back and forth along a first direction X, with the first direction X perpendicular to a conveying direction of the to-be-measured object 700.

As an example, the first direction X may be understood as a width direction of the to-be-measured object 700, and the conveying direction of the to-be-measured object 700 may be understood as a length direction of the to-be-measured object 700. The emitter component 10 moves back and forth along the first direction X. The ray emitted from the emitter component 10 can perform ray scanning on the to-be-measured object 700 along the first direction X, and as the to-be-measured object 700 moves along the conveying direction, the ray emitted from the emitter component 10 can form a "Z"-shaped ray trajectory on the to-be-measured object 700.

In this way, based on the above technical solutions, the emitter component 10 is arranged to move back and forth along the first direction X, so that the ray emitted from the emitter component 10 can run through different positions of the to-be-measured object 700 along the first direction X, to enhance the ray scanning range of the emitter component 10, thereby further improving the measurement accuracy of the surface density measurement apparatus 100.

Optionally, the first detector 20 and the second detector 30 may move synchronously with the emitter component 10 to improve the ray receiving accuracy.

In some embodiments, the first detector 20 and the second detector 30 are disposed on both sides of the emitter component 10 along a second direction Y respectively, with the first direction X, the second direction Y, and the conveying direction perpendicular pairwise.

As an example, the second direction Y may be understood as a thickness direction of the to-be-measured object 700. The first detector 20 and the second detector 30 are disposed on both sides of the emitter component 10 along the second direction Y respectively, so that the first detector 20, the second detector 30, and the emitter component 10 are arranged collinearly, and so that the ray emitted from the emitter component 10 toward the to-be-measured object 700 located in the first detection channel 21 and the ray emitted from the emitter component 10 toward the to-be-measured object 700 located in the second detection channel 31 are also collinear, thereby improving the synchronism between the ray emitted from the emitter component 10 toward the to-be-measured object 700 located in the first detection channel 21 and the ray emitted from the emitter component 10 toward the to-be-measured object 700 located in the second detection channel 31, and further improving the measurement accuracy of the surface density measurement apparatus 100.

In some embodiments, a movement velocity V1 of the emitter component 10 and a conveying velocity V2 of the to-be-measured object 700 satisfy a relationship: V1=a*(S/L)*V2, wherein a is a constant coefficient, S is a length of a one-way path H of the emitter component 10 when moving back and forth along the first direction X, and L is a length of a path of the to-be-measured object 700 from the first detector 20 to the second detector 30.

As an example, the constant coefficient a represents the number of one-way paths H of the emitter component 10 when moving back and forth when a ray trajectory received by the first detector 20 and a ray trajectory received by the second detector 30 overlap at a same position on the to-be-measured object 700. As an example, a position of the to-be-measured object 700 corresponding to a first ray trajectory received by the first detector 20 is same as a position of the to-be-measured object 700 corresponding to an (1+a)-th ray trajectory received by the second detector 30. a is a positive integer. Optionally, a may be, but is not limited to, 2, 4, 6, 8, 10, 12, 14, 16, 18, or 20, and may be selected based on an actual application environment. L represents the length of the path of the to-be-measured object 700 from the first detector 20 to the second detector 30; in other words, L is the length of the path of the to-be-measured object 700 when moving from the first detection channel 21 to the second detection channel 31.

It should be noted that a one-way path H of the emitter component 10 when moving back and forth along the first direction X is a ray trajectory received by the first detector 20 and the second detector 30. In other words, the first ray trajectory refers to a first one-way path H of the emitter component 10 when moving back and forth along the first direction X, and the (1+a)-th ray trajectory refers to a one-way path H of the emitter component 10 when moving back and forth along the first direction X.

Based on the above technical solutions, the movement velocity V1 of the emitter component 10 and the conveying velocity V2 of the to-be-measured object 700 satisfy the above mapping relationship, so that the movement velocity V1 of the emitter component 10 can be flexibly adjusted based on the conveying velocity V2 of the to-be-measured object 700, thereby effectively improving the flexibility and adaptability of the surface density measurement apparatus 100.

In some embodiments, a conveying direction of the to-be-measured object 700 in the first detection channel 21 is opposite to a conveying direction of the to-be-measured object 700 in the second detection channel 31, so that the to-be-measured object 700 may be conveyed in the surface density measurement apparatus 100 in a "Z"-shaped conveyor belt layout, thereby improving the structural compactness.

In some embodiments, the surface density measurement apparatus 100 further comprises a plurality of support rollers 40, wherein the support rollers 40 are configured to support the to-be-measured object 700 and guide the to-be-measured object 700 to move. A part of the support rollers 40 among the plurality of support rollers 40 are arranged on two opposite sides of the first detection channel 21 along a third direction Z, and other part of the support rollers 40 among the plurality of support rollers 40 are arranged on two opposite sides of the second detection channel 31 along the third direction Z, with the third direction Z parallel to the conveying direction of the to-be-measured object 700.

As an example, the support rollers 40 are provided on two opposite sides of the first detection channel 21 along the third direction Z. After the to-be-measured object 700 enters the first detection channel 21, the support rollers 40 arranged on two opposite sides of the first detection channel 21 along the third direction Z can support the to-be-measured object 700, thereby reducing jitter of the to-be-measured object 700 located in the first detection channel 21; and the support rollers 40 are provided on two opposite sides of the second detection channel 31 along the third direction Z. After the to-be-measured object 700 enters the second detection channel 31, the support rollers 40 arranged on two opposite sides of the second detection channel 31 along the third direction Z can support the to-be-measured object 700, thereby reducing jitter of the to-be-measured object 700 located in the second detection channel 31.

In this way, based on the above technical solutions, the support rollers 40 are provided, and the support rollers 40 can support the to-be-measured object 700, to reduce jitter of the to-be-measured object 700 during a conveying process, thereby reducing the impact of the jitter of the to-be-measured object 700 on the surface density measurement, which is conducive to improving the measurement accuracy of the surface density measurement apparatus 100.

In some embodiments, the surface density measurement apparatus 100 further comprises a communication component 50, wherein the communication component 50 is communicatively connected to the first detector 20 and the second detector 30, wherein the communication module is configured to obtain surface density information of the first detector 20 and the second detector 30, and send the surface density information to a target apparatus configured to coat the to-be-measured object 700.

As an example, when the to-be-measured object 700 travels through the first detection channel 21, the first detector 20 receives the ray running through the to-be-measured object 700, calculates the surface density of the to-be-measured object 700 based on the intensity of the ray emitted from the emitter component 10 and the intensity of the ray received by it, and generates first surface density information. The communication module is communicatively connected to the first detector 20 to obtain first surface density information and sends the first surface density information to the target apparatus configured to coat the to-be-measured object 700. When the to-be-measured object 700 travels through the second detection channel 31, the second detector 30 receives the ray running through the to-be-measured object 700, calculates the surface density of the to-be-measured object 700 based on the intensity of the ray emitted from the emitter component 10 and the intensity of the ray received by it, and generates second surface density information. The communication module is communicatively connected to the second detector 30 to obtain the second surface density information, and sends the second surface density information to the target apparatus configured to coat the to-be-measured object 700. The target apparatus configured to coat the to-be-measured object 700 can adjust its own relevant parameters based on the first surface density information and the second surface density information, to improve the coating uniformity. Optionally, the target apparatus may be a coating apparatus configured to coat a coating layer on a surface of a substrate of an electrode plate in the coating system.

In this way, based on the above technical solutions, the communication component 50 is arranged, so that the surface density measurement apparatus 100 measures the to-be-measured object 700 to obtain surface density information and automatically conveys the surface density information to the target apparatus configured to coat the to-be-measured object 700, thereby effectively improving the degree of automation, reducing manual intervention, and facilitating reducing the costs.

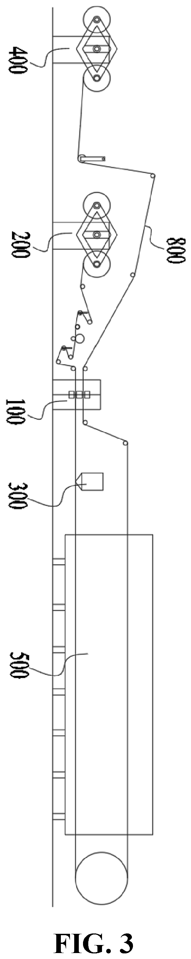

FIG. 3 is a schematic structural diagram of a coating system provided in some embodiments of the present application.

Further referring to FIG. 3, according to some embodiments of the present application, the present application further provides a coating system, comprising an unwinding apparatus 200, a coating apparatus 300, a winding apparatus 400, and the surface density measurement apparatus 100 in any one of the above solutions, wherein the unwinding apparatus 200 is configured to provide a strip material 800, the coating apparatus 300 is configured to coat a coating layer on a surface of the strip material 800, and the winding apparatus 400 is configured to wind the strip material 800 coated with the coating layer. The strip material 800 travels through the first detection channel 21 and the second detection channel 31, with the first detection channel 21 located upstream of the coating apparatus 300 and the second detection channel 31 located downstream of the coating apparatus 300 along a conveyor belt direction of the strip material 800.

As an example, in the coating system, the strip material 800 provided by the unwinding apparatus 200 may be the substrate of the electrode plate. Driven by the conveying component such as a bypass roller or a conveyor belt, the strip material 800 first travels through the first detection channel 21 of the surface density measurement apparatus 100, so that the surface density measurement apparatus 100 measures the strip material 800 located in the first detection channel 21 to obtain a surface density of the strip material 800 before coating. Then, the strip material 800 continues to be conveyed to the coating apparatus 300, so that the coating apparatus 300 coats a coating layer on the surface of the strip material 800. The strip material 800 coated with the coating layer continues to be conveyed to the second detection channel 31 of the surface density measurement apparatus 100, so that the surface density measurement apparatus 100 measures the strip material 800 coated with the coating layer and located in the second detection channel 31 to obtain a surface density of the coated strip material 800. A difference between the surface density of the coated strip material 800 and the surface density of the strip material 800 before coating is a net surface density of the coating layer. Based on the net surface density of the coating layer, relevant parameters of the coating apparatus 300 are adjusted in real time, thereby improving the overall coating quality of the electrode plate.

In this way, the above coating system uses the surface density measurement apparatus 100 of the present application to measure a surface density of the strip material 800 before coating and a surface density of the coated strip material 800, and then uses the difference between the two to obtain the net surface density of the coating layer. On the one hand, a single emitter component 10 is used to synchronously emit the ray toward the strip material 800 entering the first detection channel 21 and the strip material 800 entering the second detection channel 31, and can reduce, compared to use of two separate emitter components 10 to emit rays toward the strip material 800 located in the first detection channel 21 and the strip material 800 located in the second detection channel 31 respectively, the impact of synchronism error between the two separate emitter components 10 on the accuracy of surface density measurement. On the other hand, in the surface density measurement apparatus 100 of the present application, a length of a path of the strip material 800 when moving from the first detection channel 21 to the second detection channel 31 is a constant value, and a corresponding position relationship between the surface density of the strip material 800 before coating and the surface density of the coated strip material 800 can be determined without the need for distance measurement using a meter counter, thereby reducing the impact of distance measurement error of the meter counter on the accuracy of surface density measurement, thereby effectively improving the accuracy of surface density measurement, and improving the overall coating quality of the coating system.

In some embodiments, the coating system further comprises a drying apparatus 500, wherein the drying apparatus 500 is located downstream of the coating apparatus 300 along the conveyor belt direction.

As an example, the drying apparatus 500 is located downstream of the coating apparatus 300. After the coating apparatus 300 coats the coating layer on the surface of the strip material 800, the strip material 800 coated with the coating layer continues to be conveyed to the drying apparatus 500, so that the drying apparatus 500 can dry the coating layer, to improve the stability of the coating layer, and so that the coating layer is less likely to fall off from the substrate.

In some embodiments, the drying apparatus 500 is further located upstream of the second detection channel 31 along the conveyor belt direction.

As an example, driven by the conveying component such as a bypass roller or a conveyor belt, the strip material 800 first travels through the first detection channel 21 of the surface density measurement apparatus 100, so that the surface density measurement apparatus 100 measures the strip material 800 located in the first detection channel 21 to obtain the surface density of the strip material 800 before coating. Then, the strip material 800 continues to be conveyed to the coating apparatus 300, so that the coating apparatus 300 coats the coating layer on the surface of the strip material 800. The strip material 800 coated with the coating layer continues to be conveyed to the drying apparatus 500, so that the drying apparatus 500 dries the coating layer to obtain a dry film coating layer. The strip material 800 coated with the dry film coating layer continues to be conveyed to the second detection channel 31 of the surface density measurement apparatus 100, so that the surface density measurement apparatus 100 measures the strip material 800 coated with the dry film coating layer and located in the second detection channel 31 to obtain the surface density of the coated strip material 800. The difference between the surface density of the coated strip material 800 and the surface density of the strip material 800 before coating is a net surface density of the dry film coating layer. Based on the net surface density of the dry film coating layer, relevant parameters of the coating apparatus 300 are adjusted in real time, thereby improving the overall coating quality of the electrode plate.

Based on the above technical solutions, the drying apparatus 500 is arranged upstream of the second detection channel 31, so that the strip material 800 is coated by the coating apparatus 300 and dried by the drying apparatus 500 before surface density measurement through the second detection channel 31 of the surface density measurement apparatus 100, thereby resulting in high stability of the dry film coating layer, further reducing surface density measurement errors, achieving effective real-time adjustment of relevant parameters of the coating apparatus 300 based on the net surface density of the dry film coating layer, and facilitating further improving the overall coating quality of the electrode plate.

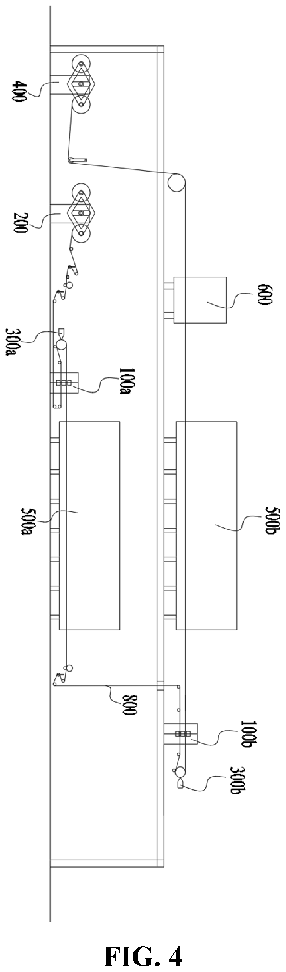

FIG. 4 is a schematic structural diagram of another coating system provided in some embodiments of the present application.

Further referring to FIG. 4, in some embodiments, two coating apparatuses 300 are provided, and the two coating apparatuses 300 are arranged along a conveyor belt direction, with one of the two coating apparatuses 300 configured to coat a coating layer on one surface of the strip material 800 and the other one of the two coating apparatuses 300 configured to coat a coating layer on other surface of the strip material 800. Two surface density measurement apparatuses 100 are provided, and the two surface density measurement apparatuses 100 are arranged corresponding to the two coating apparatuses 300 respectively.

As an example, in order to more clearly introduce the embodiments of the present application, the description is provided below when the two coating apparatuses 300 are configured as, e.g., a first coating apparatus 300a and a second coating apparatus 300b respectively and the two surface density measurement apparatuses 100 are configured as, e.g., a first surface density measurement apparatus 100a and a second surface density measurement apparatus 100b respectively.

The first coating apparatus 300a is located upstream of the second coating apparatus 300b. The first coating apparatus 300a is configured to coat a first surface of the strip material 800, and the second coating apparatus 300b is configured to coat a second surface of the strip material 800, with the first surface opposite to the second surface along a thickness direction of the strip material 800. The first detection channel 21 of the first surface density measurement apparatus 100a is located upstream of the first coating apparatus 300a, and the second detection channel 31 of the first surface density measurement apparatus 100a is located downstream of the first coating apparatus 300a. The first detection channel 21 of the second surface density measurement apparatus 100b is located upstream of the second coating apparatus 300b, and the second detection channel 31 of the second surface density measurement apparatus 100b is located downstream of the second coating apparatus 300b.

Driven by the conveying component such as a bypass roller or a conveyor belt, the strip material 800 first travels through the first detection channel 21 of the first surface density measurement apparatus 100a. The first surface density measurement apparatus 100a measures the strip material 800 to obtain an initial strip material 800 surface density of the strip material 800 before coating. The initial strip material 800 surface density may be understood as a surface density of the substrate of the electrode plate. Then, the strip material 800 continues to be conveyed to the first coating apparatus 300a, so that the first coating apparatus 300a coats a first coating layer on the first surface of the strip material 800. The strip material 800 coated with the first coating layer continues to be conveyed to the second detection channel 31 of the first surface density measurement apparatus 100a, so that the first surface density measurement apparatus 100a measures the strip material 800 coated with the first coating layer to obtain a first strip material 800 surface density of the strip material 800 coated with the first coating layer. The first strip material 800 surface density may be understood as a total surface density of the substrate and the first coating layer. A difference between the first strip material 800 surface density and the initial strip material 800 surface density is a net surface density of the first coating layer.

Then, the strip material 800 coated with the first coating layer continues to be conveyed to the first detection channel 21 of the second surface density measurement apparatus 100b, so that the second surface density measurement apparatus 100b measures the strip material 800 coated with the first coating layer to obtain a second strip material 800 surface density. The second strip material 800 surface density may be understood as the total surface density of the substrate and the first coating layer. Then, the strip material 800 coated with the first coating layer continues to be conveyed to the second coating apparatus 300b, so that the second coating apparatus 300b coats a second coating layer on the second surface of the strip material 800. The strip material 800 coated with the first coating layer and the second coating layer continues to be conveyed to the second detection channel 31 of the second surface density measurement apparatus 100b, so that the second surface density measurement apparatus 100b measures the strip material 800 coated with the first coating layer and the second coating layer to obtain a third strip material 800 surface density of the strip material 800 after the second coating layer is coated. The third strip material 800 surface density may be understood as a total surface density of the substrate, the first coating layer, and the second coating layer. A difference between the third strip material 800 surface density and the second strip material 800 surface density is a net surface density of the second coating layer.

It should be noted that the first strip material 800 surface density and the second strip material 800 surface density in the above embodiments each refer to the total surface density of the substrate and the first coating layer. When the strip material 800 is conveyed from the second detection channel 31 of the first surface density measurement apparatus 100a to the first detecting channel 21 of the second surface density measurement apparatus 100b, the strip material 800 travels through the component such as a bypass roller or a vibrating roller, thus easily resulting in a movement error. Therefore, the first detection channel 21 of the second surface density measurement apparatus 100b re-detects the total surface density of the substrate and the first coating layer to obtain the second strip material 800 surface density, and calculates the net surface density of the second coating layer based on the second strip material 800 surface density and the third strip material 800 surface density, to filter out the movement error generated when the strip material 800 travels through the component such as a bypass roller or a vibrating roller, thereby improving the overall accuracy of the surface density measurement.

Based on the above technical solutions, two coating apparatuses and two surface density measurement apparatuses 100 are arranged, so that the coating system achieves double-sided coating of the strip material 800 on one production line, thereby improving the coating efficiency of the coating system.

In some embodiments, the coating system further comprises two drying apparatuses 500, wherein the two drying apparatuses 500 are arranged corresponding to the two coating apparatuses 300, with the drying apparatuses 500 located downstream of the coating apparatuses 300 along the conveyor belt direction.

As an example, in order to more clearly introduce the embodiments of the present application, the description is provided below when the two drying apparatuses 500 are configured as, e.g., a first drying apparatus 500a and a second drying apparatus 500b.

The first drying apparatus 500a is located downstream of the first coating apparatus 300a, and the second drying apparatus 500b is located downstream of the second coating apparatus 300b. The first drying apparatus 500a is located downstream of the second detection channel 31 of the first surface density measurement apparatus 100a, and upstream of the first detection channel 21 of the second surface density measurement apparatus 100b. The second drying apparatus 500b is located downstream of the second detection channel 31 of the second surface density measurement apparatus 100b.

Driven by the conveying component such as a bypass roller or a conveyor belt, the strip material 800 first travels through the first detection channel 21 of the first surface density measurement apparatus 100a. The first surface density measurement apparatus 100a measures the strip material 800 to obtain an initial strip material 800 surface density of the strip material 800 before coating. The initial strip material 800 surface density may be understood as a surface density of the substrate of the electrode plate. Then, the strip material 800 continues to be conveyed to the first coating apparatus 300a, so that the first coating apparatus 300a coats a first coating layer on the first surface of the strip material 800. The strip material 800 coated with the first coating layer continues to be conveyed to the second detection channel 31 of the first surface density measurement apparatus 100a, so that the first surface density measurement apparatus 100a measures the strip material 800 coated with the first coating layer to obtain a first strip material 800 surface density of the strip material 800 coated with the first coating layer. The first strip material 800 surface density may be understood as a total surface density of the substrate and the first coating layer. A difference between the first strip material 800 surface density and the initial strip material 800 surface density is a net surface density of the first coating layer.

Then, the strip material 800 coated with the first coating layer continues to be conveyed to the first drying apparatus 500a, so that the first drying apparatus 500a dries the first coating layer to obtain a first dry film coating layer. The strip material 800 coated with the first coating layer continues to be conveyed to the first detection channel 21 of the second surface density measurement apparatus 100b, so that the second surface density measurement apparatus 100b measures the strip material 800 coated with the first dry film coating layer to obtain the second strip material 800 surface density. The second strip material 800 surface density may be understood as a total surface density of the substrate and the first dry film coating layer. Then, the strip material 800 coated with the first dry film coating layer continues to be conveyed to the second coating apparatus 300b, so that the second coating apparatus 300b coats a second coating layer on the second surface of the strip material 800. The strip material 800 coated with the first dry film coating layer and the second coating layer continues to be conveyed to the second detection channel 31 of the second surface density measurement apparatus 100b, so that the second surface density measurement apparatus 100b measures the strip material 800 coated with the first dry film coating layer and the second coating layer to obtain a third strip material 800 surface density of the strip material 800 after the second coating layer is coated. The third strip material 800 surface density may be understood as a total surface density of the substrate, the first dry film coating layer, and the second coating layer. A difference between the third strip material 800 surface density and the second strip material 800 surface density is a net surface density of the second coating layer.

Then, the strip material 800 coated with the first dry film coating layer and the second coating layer continues to be conveyed to the second drying apparatus 500b, so that the second drying apparatus 500b dries the second coating layer to obtain a second dry film coating layer. Then, the strip material 800 coated with the first dry film coating layer and the second dry film coating layer continues to be conveyed to the winding apparatus 400 for winding.

Based on the above technical solutions, the two drying apparatuses 500 are arranged, so that on the one hand, the coating system further dries the coating layer of the strip material 800 on one production line, thereby further improving the coating efficiency of the coating system. On the other hand, the first coating layer is dried to obtain the first dry film coating layer with high stability, followed by coating of the second coating layer and measurement using the second surface density measurement apparatus 100b, thereby further reducing subsequent measurement error of the second surface density measurement apparatus 100b and coating difficulty of the second coating apparatus, and facilitating further improving the overall coating quality of the electrode plate.

Optionally, the first drying apparatus 500a may be located downstream of the first coating apparatus 300a and upstream of the second detection channel 31 of the first surface density measurement apparatus 100a, and the second drying apparatus 500b may be located downstream of the second coating apparatus 300b and located upstream of the second detection channel 31 of the second surface density measurement apparatus 100b, which may be selected based on an actual application environment, and will not be repeated here.

In some embodiments, the coating system further comprises a detection apparatus 600, wherein the detection apparatus 600 is configured to measure a surface density of the strip material 800 coated with the coating layer dried by the drying apparatuses 500 on both surfaces.

As an example, the strip material 800 coated with the first dry film coating layer and the second dry film coating layer travels through the detection apparatus 600 before reaching the winding apparatus 400 for winding. The detection apparatus 600 measures the strip material 800 coated with the first dry film coating layer and the second dry film coating layer to obtain a fourth strip material 800 surface density. The fourth strip material 800 surface density may be understood as a total surface density of the substrate, the first dry film coating layer, and the second dry film coating layer, i.e., an overall surface density of the coated electrode plate.

Based on the above technical solutions, the detection apparatus 600 is arranged to measure the overall surface density of the coated electrode plate for use as data for monitoring the coating quality of the electrode plate, which is conductive to improving the reliability of the coating system.

Optionally, the detection apparatus 600 may be, e.g., an X-ray surface density meter, a β-ray surface density meter, or a laser-integrated micro-spot surface density meter commercially available at present.

In some embodiments, the detection apparatus 600 is configured as the surface density measurement apparatus 100 provided in the embodiments of the present application, which can improve the consistency of the entire coating system.

In order to better understand the surface density measurement apparatus 100 provided in the embodiments of the present application, based on the same inventive concept, an embodiment of the above surface density measurement apparatus 100 in practical application is provided herein for description.

An embodiment of the present application provides a surface density measurement apparatus 100, wherein the surface density measurement apparatus 100 comprises an emitter component 10, a first detector 20, a second detector 30, and a plurality of support rollers 40. The emitter component 10 is configured to emit a ray toward a to-be-measured object 700, and the emitter component 10 is configured to be movable back and forth along a first direction X, with the first direction X perpendicular to a conveying direction of the to-be-measured object 700. A movement velocity V1 of the emitter component 10 and a conveying velocity V2 of the to-be-measured object 700 satisfy a relationship: V1=a*(S/L)*V2, wherein a is a constant coefficient, S is a length of a one-way path H of the emitter component 10 when moving back and forth along the first direction X, and L is a length of a path of the to-be-measured object 700 from the first detector 20 to the second detector 30.

The first detector 20 forms with the emitter component 10 a first detection channel 21 for the to-be-measured object 700 to travel through, and the first detector 20 is capable of receiving the ray running through the to-be-measured object 700 located in the first detection channel 21, to measure a surface density of the to-be-measured object 700. The second detector 30 forms with the emitter component 10 a second detection channel 31 for the to-be-measured object 700 to travel through, and the second detector 30 is capable of receiving the ray running through the to-be-measured object 700 located in the second detection channel 31, to measure a surface density of the to-be-measured object 700. The emitter component 10 is configured to synchronously emit the ray toward the to-be-measured object 700 entering the first detection channel 21 and the to-be-measured object 700 entering the second detection channel 31. The first detector 20 and the second detector 30 are disposed on both sides of the emitter component 10 along a second direction Y respectively, with the first direction X, the second direction Y, and the conveying direction perpendicular pairwise. The first detector 20 and the second detector 30 move synchronously with the emitter component 10. A conveying direction of the to-be-measured object 700 in the first detection channel 21 is opposite to a conveying direction of the to-be-measured object 700 in the second detection channel 31.

The support rollers 40 are configured to support the to-be-measured object 700 and guide the to-be-measured object 700 to move. A part of the support rollers 40 among the plurality of support rollers 40 are arranged on two opposite sides of the first detection channel 21 along a third direction Z, and other part of the support rollers 40 among the plurality of support rollers 40 are arranged on two opposite sides of the second detection channel 31 along the third direction Z, with the third direction Z parallel to the conveying direction of the to-be-measured object 700.

According to some embodiments of the present application, the present application further provides a coating system, comprising an unwinding apparatus 200, a coating apparatus 300, a winding apparatus 400, and the surface density measurement apparatus 100 in any one of the above solutions, wherein the unwinding apparatus 200 is configured to provide a strip material 800, the coating apparatus 300 is configured to coat a coating layer on a surface of the strip material 800, and the winding apparatus 400 is configured to wind the strip material 800 coated with the coating layer. The strip material 800 travels through the first detection channel 21 and the second detection channel 31, with the first detection channel 21 located upstream of the coating apparatus 300 and the second detection channel 31 located downstream of the coating apparatus 300 along a conveyor belt direction of the strip material 800.

It should be noted that the embodiments in the present application and the features in the embodiments may be combined with each other in case of no conflict.

Finally, it should be noted that all the above embodiments are only used for explaining, rather than limiting, the technical solution of the present application. Although the present application has been described in detail with reference to all the above embodiments, it should understand by those of ordinary skill in the art that the technical solutions described in the above embodiments can still be modified, or some or all of the technical features thereof can be equivalently replaced. The modifications or replacements do not deviate the nature of the corresponding technical solutions from the scope of the embodiments of the present application, and should all be included in the scope of the claims and specification of the present application. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A surface density measurement apparatus, comprising:
an emitter component configured to emit a ray toward a to-be-measured object;
a first detector forming with the emitter component a first detection channel for the to-be-measured object to travel through and capable of receiving the ray running through the to-be-measured object located in the first detection channel, to measure a surface density of the to-be-measured object; and
a second detector forming with the emitter component a second detection channel for the to-be-measured object to travel through and capable of receiving the ray running through the to-be-measured object located in the second detection channel, to measure the surface density of the to-be-measured object;
wherein the emitter component is configured to synchronously emit the ray toward the to-be-measured object entering the first detection channel and the to-be-measured object entering the second detection channel.

2. The surface density measurement apparatus according to claim 1, wherein the emitter component is configured to be movable back and forth along a first direction with the first direction perpendicular to a conveying direction of the to-be-measured object.

3. The surface density measurement apparatus according to claim 2, wherein the first detector and the second detector are disposed on both sides of the emitter component along a second direction respectively, with the first direction, the second direction, and the conveying direction perpendicular pairwise.

4. The surface density measurement apparatus according to claim 2, wherein a movement velocity V1 of the emitter component and a conveying velocity V2 of the to-be-measured object satisfy a relationship: V1=a*(S/L)*V2, wherein a is a constant coefficient, S is a length of a one-way path of the emitter component when moving back and forth along the first direction, and L is a length of a path of the to-be-measured object from the first detector to the second detector.

5. The surface density measurement apparatus according to any one of claims 1 to 4, wherein a conveying direction of the to-be-measured object in the first detection channel is opposite to a conveying direction of the to-be-measured object in the second detection channel.

6. The surface density measurement apparatus according to any one of claims 1 to 5, wherein the surface density measurement apparatus further comprises a plurality of support rollers configured to support the to-be-measured object and guide the to-be-measured object to move;
a part of the support rollers among the plurality of support rollers are arranged on two sides of the first detection channel that are opposite to each other along a third direction, and other part of the support rollers among the plurality of support rollers are arranged on two sides of the second detection channel that are opposite to each other along the third direction, with the third direction parallel to the conveying direction of the to-be-measured object.

7. The surface density measurement apparatus according to any one of claims 1 to 6, wherein the surface density measurement apparatus further comprises a communication component communicatively connected to the first detector and the second detector, wherein the communication module is configured to obtain surface density information of the first detector and the second detector, and send the surface density information to a target apparatus configured to coat the to-be-measured object.

8. The surface density measurement apparatus according to any one of claims 1 to 7, wherein the emitter component comprises at least one of an X-ray generator, a β-ray generator, and a laser generator.

9. A coating system, comprising:
an unwinding apparatus configured to provide a strip material;
a coating apparatus configured to coat a coating layer on a surface of the strip material;
a winding apparatus configured to wind the strip material coated with the coating layer; and
the surface density measurement apparatus according to any one of claims 1 to 8, wherein the strip material travels through the first detection channel and the second detection channel, with the first detection channel located upstream of the coating apparatus and the second detection channel located downstream of the coating apparatus along a conveyor belt direction of the strip material.

10. The coating system according to claim 9, wherein the coating system further comprises a drying apparatus located downstream of the coating apparatus along the conveyor belt direction.

11. The coating system according to claim 10, wherein the drying apparatus is further located upstream of the second detection channel along the conveyor belt direction.

12. The coating system according to claim 9, wherein two coating apparatuses are provided along the conveyor belt direction, with one of the two coating apparatuses configured to coat the coating layer on one surface of the strip material and the other one of the two coating apparatuses configured to coat the coating layer on other surface of the strip material; and
two surface density measurement apparatuses are provided corresponding to the two coating apparatuses respectively.

13. The coating system according to claim 12, wherein the coating system further comprises two drying apparatuses arranged corresponding to the two coating apparatuses and located downstream of the coating apparatuses along the conveyor belt direction.

14. The coating system according to claim 13, wherein the coating system further comprises a detection apparatus configured to measure a surface density of the strip material coated with the coating layer dried by the drying apparatuses on both surfaces.

15. The coating system according to claim 14, wherein the detection apparatus is configured as the surface density measurement apparatus.
